# EUROPEAN PATENT APPLICATION

(11) **EP 0 743 464 A1**
(43) Date of publication of application: **20.11.1996**
(21) Application number: 96107256.8
(22) Date of filing: 08.05.1996
(51) Int. Cl.: F16C 17/08, F16C 19/12, H02K 5/167

(54) **A low friction and controlled clearance axial bearing system, and methods of assembling such a system**

(30) Priority: 16.05.1995 IT TO950386
(71) Applicant: BITRON S.p.A., I-10064 Pinerolo (Torino) (IT)
(72) Inventor: De Filippis, Pietro, 20052 Monza MI (IT); Petrone, Alberto, 10093 Collegno TO (IT)
(74) Representative: Lotti, Giorgio

(57) **Abstract**

In an axial coupling system with a minimum controlled clearance between a rotating shaft (10) and a support (20), an axially centred ball (22) is driven in the bottom of the recess (23) accommodating the shaft (10). An axially retaining ring (19) is driven on the shaft at a predetermined position determining the axial clearance (ΔX) of the shaft. The shaft has a range of motion comprising two opposite positions: a preferred normal operation position providing a low friction thrust bearing action, in which one end of the shaft rests on the ball (22), and the retaining ring (19) does not contact members rigid with the support; and a second position in which the retaining ring (19) abuts against a bushing fixed in the support.

## Description

### FIELD OF THE INVENTION

The present invention refers to an axial coupling system with a minimum controlled clearance between a shaft and a support in relative rotation. The coupling is of the thrust bearing kind, provides very low friction and incorporates a lubricant reservoir. Also, the invention relates to methods of assembling such a coupling. Particularly, the present invention is applicable to the field of electric motors.

### BACKGROUND OF THE INVENTION

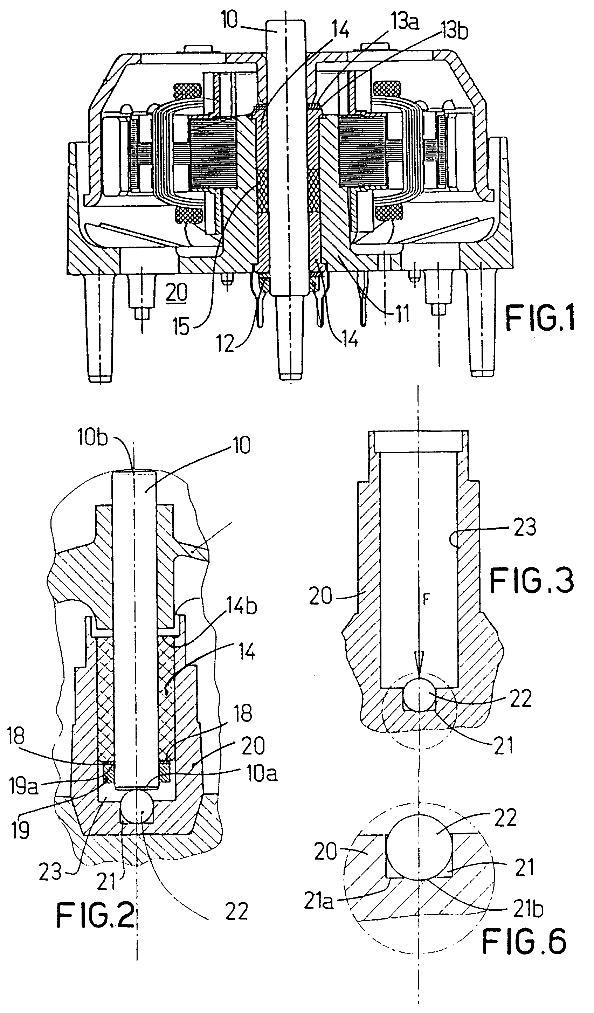

At present there are known axial couplings such as the one depicted in FIG. 1 in axial cross section, which is referred to an electric motor. In this typical example, a rotating shaft 10 is inserted in a stationary support 11. The axial load of the shaft is transmitted to the support at the sliding contact zone of the two relatively rotating bodies through one or more thrust washers 13a, 13b of antifriction material.

This kind of coupling generates considerable resisting torque. As a result, efficiency of the machine which the coupling is incorporated in (for example, an electric motor) remains far from ideal values. In addition, owing to friction generated during mutual rotation of the shaft and its seat, the thrust washers tend to wear rather quickly. As these members undergoing sliding contact become thinner, the overall axial clearance of the two parts in relative rotation increases. Further, such a sliding action can cause noise due to slight constructional defects of the facing surfaces.

In many applications, the axial clearance between the shaft and the seat is to be kept down to a minimum. Particularly, when the mutually rotating parts have a large mass, in case of low frequency vibration occurring, in some cases the mass will gain so much energy to tend to force the coupling. The axial clearance may therefore progressively increase until correct operation of the machine is compromised. However, a very slight axial clearance between the shaft and its set is indispensable to ensure mutual rotation.

As apparent, control of axial clearance is of primary importance for manufacturers.

At present, axial clearance of the shaft depends on a plurality of tolerances of adjacent members, i.e., the thickness of retaining ring 12, the axial locking position of this ring along the shaft, the thickness of dampening ring 13, the thickness of bushings 14 for containing the shaft sideways, and the position at which these bushings are fitted in the support.

The total tolerance that is determined by such a series of adjacent members is high. Therefore, it is necessary to control accurately the sizes of each single member and the position at which they are fitted. The overall axial clearance results in being high, affecting adversely reliability. On the contrary, a far too low clearance decreases efficiency.

The above discussed prior art coupling with washers also has in inconvenience concerning lubricant consumption. As the washers are rotated, they centrifuge oil from the contact zone of sintered bushings 14.

### SUMMARY OF THE INVENTION

A main object of the present invention is to provide a coupling system capable of overcoming the above prior art drawbacks. Particularly, it is an object of the present invention to provide a high efficiency coupling having a very low, if not negligible, friction resisting torque in the operational thrust bearing position.

A further object of the invention is to provide a coupling between the shaft and the support wherein the axial clearance is controlled and as small as possible without affecting correct operation in varying conditions.

These and further objects which will be more apparent hereinafter are attained according to the present invention by the provision of an axial coupling system with a minimum controlled clearance between a shaft and a support in relative rotation, the shaft being seated in a seat provided with first and second stopping means for stopping axial movement of the shaft, characterised in that said first stopping means are comprised of an axial centred and substantially point-like rest, an axial retaining member being driven on the shaft; the shaft having a range of motion comprising two opposite positions:
a first, preferred normal operation position providing a low friction thrust bearing action, in which one end of the shaft is resting on said point-like rest, and said retaining member does not contact members rigid with the support; and
a second position in which the retaining member abuts against said second stopping means.

According to another aspect of the invention, the above object is attained by a method as claimed in claim 12.

In accordance with yet another aspect of the invention, the above object is attained by a method as claimed in claim 15.

### BRIEF DESCRIPTION OF THE DRAWINGS

For a better understanding of the present invention, reference is made to the following detailed description of various exemplary embodiments considered in combination with the accompanying drawings in which:
- FIG. 1: is an axial sectional view of a conventional coupling system;
- FIG. 2: is an axial section view of a first embodiment of the coupling system according to the present invention;
- FIGS. 2, 3 and 4: show successive steps of an assembly method according to this invention for accomplishing the arrangement of FIG. 2;
- FIG. 6: is a view of a detail of FIG. 3 to an enlarged scale;

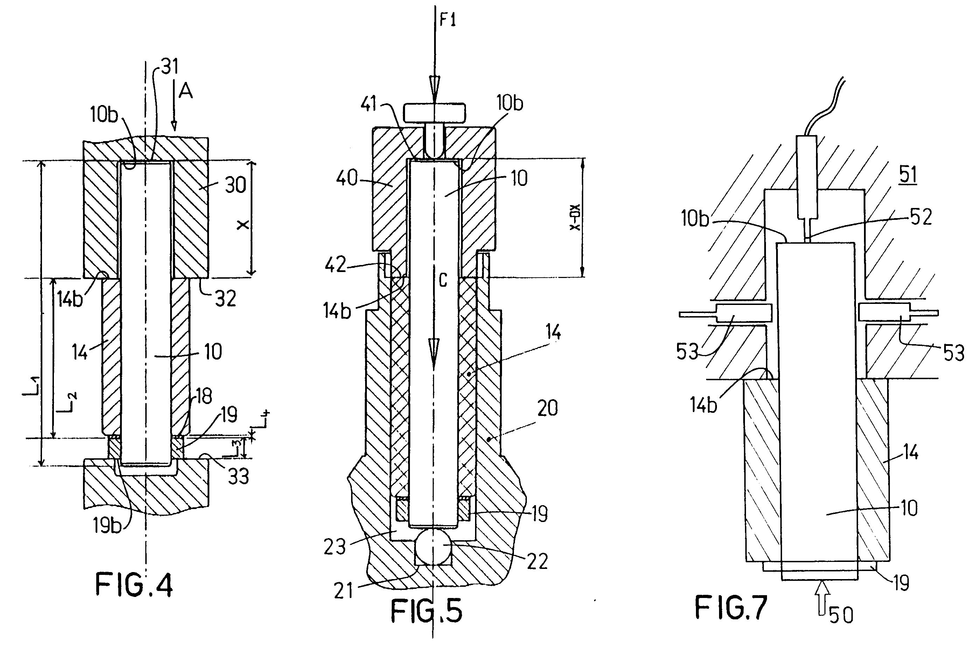

- FIG. 7: depicts a step of an assembly method alternative to the one of FIGS. 3 to 6;

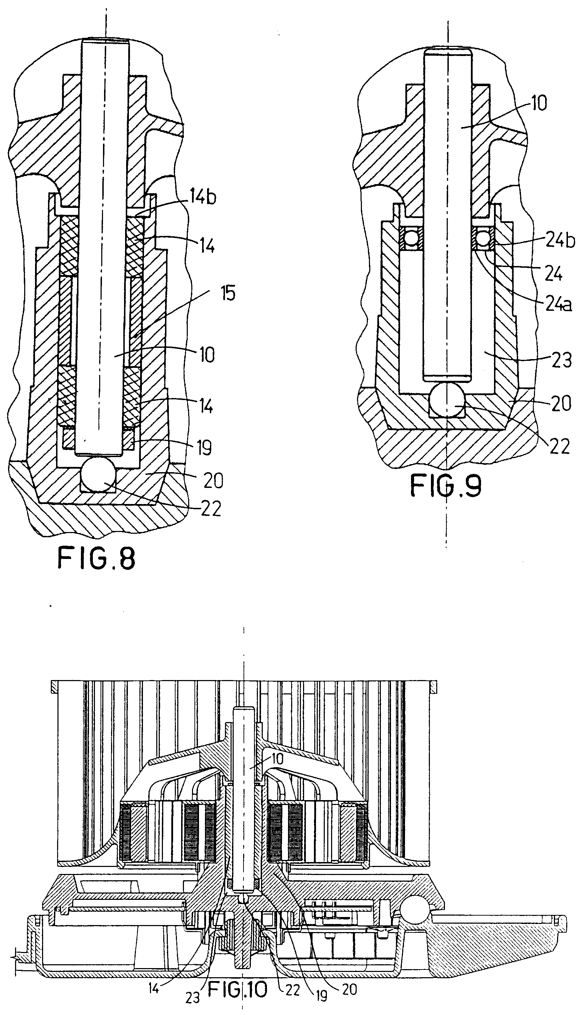

- FIGS. 8 and 9: illustrate two more different alternative embodiments of the assembly method of this invention; and
- FIG. 10: illustrates an exemplary application of the present invention to an electric motor.

### DETAILED DESCRIPTION OF THE INVENTION

With reference initially to FIG. 2, the system of the present invention provides for the coupling of two relatively rotating parts, of which one is a shaft 10, and the other is a support 20 for bearing the axial thrust of the shaft.

In the exemplary embodiments illustrated in the drawings (FIGS. 2, 7, 8, 9) shaft 10 is the rotating part and support 20 is stationary, being it understood that the situation may be indifferently reversed without departing from the scope of this invention.

Still referring to FIG. 2, a cylindrical seat 23 is obtained in the support 20. A bushing 14, preferably of sintered material, is interference fitted in cylindrical seat 23 for containing shaft 10 laterally, letting the shaft free to rotate about its axis. Obtained in the bottom of cylindrical seat 23 is a central dead hole 21 providing a seat for a steel ball 22 of the kind for use in ball bearings. Ball 22 is therefore of a material the hardness of which is comparable to that of the shaft 10. The support 20 is constructed of a material which is less hard than steel for ball bearings. For example, the support is formed as a die-cast aluminium block or formed of another material, for example plastic.

Ball 22 provides an axially centred, convex and substantially point-like rest.

A retaining ring 19 is forcefully inserted on shaft 10 proximate to the lower end thereof. Bushing 14 rests on retaining ring 19 through a thin dampening washer 18 which has a low friction coefficient and is adapted for resiliently absorbing small impacts. As discussed in detail hereinafter, the axial locking position of ring 19 on shaft 10 is determinant for setting the axial clearance that is to be attained between the shaft and the support. The clearance is given by the range of motion that the shaft can perform between a first, lower position resting on ball 22, and a second, upper position in which the upper face 19a of retaining ring 19 abuts against the bushing 14 rigid with support 20.

Preferably, the dead hole 21 is suitably sized such that ball 22 is fixed therein by applying a considerably greater force than those forces that the shaft usually transmits to the support in operation. Driving of the ball causes a permanent compression set 21b in the bottom 21a of dead hole 21 (FIG. 6). As a result, the bearing base of the ball is not likely to undergo further permanent set during assembly or in normal operation. The shaft will keep the axial clearance that is set during assembly.

It will be appreciated that the above disclosed arrangement provides a rotational coupling with an extremely low resisting moment by virtue of the punctual and axial contact between two hard metal bodies. The parts in contact will undergo an extremely low wear over time, and keep the initial arrangement substantially unchanged. In addition, friction between the shaft and the ball is further reduced by the constant lubricating provided by the oil that fills the cylindrical seat 23. This oil provides a supplementary reservoir in the case a sintered bushing is used.

Referring now to FIGS. 3 to 6, according to a first form of a method for assembling a system as the one above described, a preliminary step provides for driving the ball 22 in the dead hole 21 (FIG. 3), so as to provide a permanent set 21b in the bottom 21a of the hole. To accomplish this, a force F is applied which is much greater than the loads that the shaft will apply to the support during the following assembling steps and in operation.

The following step (FIG. 4) comprises a series of operations having the aim of setting accurately the position of retaining ring 19 on shaft 10, thereby providing a calibrated unit consisting of the shaft and other members inserted thereon in a fixed position.

First, the ring 19 and the bushing 14 are slipped on the shaft with the washer 18 interposed. Then, a tool 30 with two abutments 31, 32 axially spaced of a fixed predetermined distance X.

The dual abutment tool 30 is inserted on the upper end 10b of the shaft on the bushing 14 side opposite the lower end 10a where ring 19 is inserted.

An axial contrast for retaining ring 19 is provided, for example abutting the lower face 19b of retaining ring 19 against a preferably fixed, axial datum and resisting surface 33.

As indicated by the direction of arrow A in FIG. 4, the tool 30 and the resisting surface 33 are brought near to each other overcoming the resisting action provided by the forceful coupling of the shaft and the retaining ring. In doing so, the ring and the shaft slide relative to each other until the arrangement of FIG. 4 is reached, in which:
- the first abutment 31 is against the upper end 10b of the shaft;
- the second abutment is against the upper edge 14a of the bushing;
- all the members inserted on the shaft (the bushing, the washer) are axially compressed against the retaining ring.

In this calibrated arrangement, in which the axial position of the retaining ring on the shaft is fixed, the axial distance between the upper edge 14b of the bushing and the upper end 10b of the shaft is equal to the distance X between the abutments 31, 32 of tool 30.

The following step provides for insertion of the calibrated unit consisting of shaft 10, retaining ring 19, bushing 14 and washer 18 on the support 20, as shown in FIG. 5. The bushing 14 is forcefully fitted in cylindrical seat 23 by using a second tool 40 with two abutments 41, 42 axially spaced of a predetermined fixed distance X-ΔX, where X is the fixed distance between the two abutments of the first dual abutment tool 30 of FIG. 4, and ΔX is the controlled axial clearance that is to be attained between the shaft and the support. The abutment 41 urges the shaft against the rest ball 22. In this position, the abutment 42 has inserted the bushing inside the support to the extent that a distance X-ΔX is provided between the upper edge 14b of the bushing and the upper end 10b of the shaft. Consequently, there is a residual distance or clearance ΔX set between the lower edge 14a of the bushing (rigid with the support) and the retaining ring 19 (rigid with the shaft).

It will be appreciated that the above disclosed method allows to set the desired clearance between the shaft and the support with accuracy, by the simple provision of two tools with abutments spaced apart of the desired clearance ΔX, regardless of processing tolerances (L1, L2, L3, L4) and assembly tolerances of the various components involved. The overall clearance is set by the two dual abutment tools 30, 40 for setting the position of the retaining ring along the shaft and the insertion of the bushing in the support, respectively, instead of being determined by a combination of tolerances.

Further, the method of this invention provides a means of effecting a calibrating operation in the case upon mounting the shaft, it is desired to adjust an insufficient clearance by increasing it slightly. Still referring to FIG. 5, to coin further (0.02-0.03 mm) the ball 22 in its seat 21, a force F1 is applied, force F1 being slightly greater than the force F used in driving the ball 22 in its seat 21. Obviously, the initial driving force F will have to be such that the support can still be deformed to set the desired clearance. Should the clearance be excessive, it can be reduced by applying a suitable load to the bushing pushing it nearer the ball.

On completing the coupling, the axial forces F₂ occurring in normal operation (wherein F₂<F<F₁) between the shaft and the support will not cause the fixed axial clearance X to change.

Referring to FIG. 7, an alternative assembly method different from the one discussed with reference to FIGS. 4 to 6 provides for the use of electronic or numeral control apparatuses for controlling the deepness at which the bushing is inserted in the support.

Upon coining the ball 22 as discussed with reference to FIG. 3, the unit formed by the shaft 10 on which the retaining ring 19 is driven and the washer 18 and the bushing 14 are inserted is arranged. A tool 50 supports said unit and inserts it in the head 51 of a press, as depicted. The upper edge 14b of the bushing abuts against the head 51 with a force sufficient to clear the clearances of all the elements inserted on the shaft, but without moving the retaining ring 19. An electronic comparator 52 reads the position of the upper end 10b of the shaft and is reset on this value. A pair of side pressers 53 engage the shaft and lock the unit. Tool 50 is removed, and the unit is inserted in the support (not shown in FIG. 7). The bushing 14 is forced into the seat 23. The pressers release the shaft, which rests on ball 22. The press 51 keeps lowering, driving the bushing in the support until the comparator detects the shaft end 10b and sends the press a datum signal, whereby the press stops upon reaching the zero position, with the difference ±ΔX.

In a further workstation (not shown) the axial clearance attained is measured. If necessary, a return-to-press signal is generated for adjusting the difference between the desired clearance and that which is actually provided by the method.

It is to e understood that the embodiments described above are merely exemplary and that persons skilled in the art may make many modifications without departing from the spirit and scope of the invention. For example, as shown in FIG. 8, the members that are inserted on the shaft may comprise a plurality of bushings 14 with a spacer 15 interposed. Optionally, as shown in FIG. 9, a radial bearing 24 driven on the shaft can act as an axial retaining member replacing the retaining ring of the previous examples. Particularly, the inner race 24a of the bearing is driven on the shaft, while the outer race 24b is driven in the support. Obviously, in normal operation the bearing (not a thrust bearing) does not withstand axial forces. The axial clearance between the shaft and the support is given by the constructional tolerance of the bearing races 24a, 24b, reduced of a length determined by the level at which the outer race 24b and the ball 22 are fixed in the support.

## Claims

1. An axial coupling system with a minimum controlled clearance between a shaft (10) and a support (20) in relative rotation, the shaft (10) being seated in a seat (23) provided with first and second stopping means for stopping axial movement of the shaft, characterised in that said first stopping means are comprised of an axial centred and substantially point-like rest (22), an axial retaining member (19) being driven on the shaft; the shaft having a range of motion comprising two opposite positions:
a first, preferred normal operation position providing a low friction thrust bearing action, in which one end of the shaft is resting on said point-like rest (22), and said retaining member (19) does not contact members rigid with the support; and
a second position in which the retaining member (19) abuts against said second stopping means (14).

2. A system according to claim 1, characterised in that said retaining member (19) is a ring driven on the side surface of the shaft at a predetermined position determining the axial clearance (ΔX) of the shaft between said first and second positions,

3. A system according to claim 1, characterised in that the seat (23) is a recess of substantially cylindrical shape obtained in said support (20) and having a closed bottom.

4. A system according to claim 3, characterised in that said rest (22) consists of a ball driven in the bottom of the recess (23) in a position centred on the axis of rotation.

5. A system according to claim 4, characterised in that the ball (22) is of a harder material than that constituting the bottom of the recess (32).

6. A system according to claim 5, characterised in that the ball (22) is a steel ball of the kind for bearings.

7. A system according to claim 4, characterised in that the ball (22) is driven in a dead hole (21) provided in the bottom of the recess (23).

8. A system according to claim 4, characterised in that the recess (23) contains oil so as to cover the contact zone between the shaft (10) and the ball (22), the recess (23) being suitably sized to provide an oil reservoir for the lifetime of the bushing (14).

9. A system according to claim 1, characterised in that the shaft (10) is inserted in at least one radial bushing (14) free to rotate therein , said at least one radial bushing being forcefully fitted in said seat (23) so as to provide said second stopping means.

10. A system according to claims 2 and 9, characterised in that a washer (18) is interposed between the bushing (14) and the retaining ring (19), said washer being of an impact dampening material with a low friction coefficient.

11. An electric motor of the kind comprising a rotor resting on the stator by means of a rotary shaft (10), characterised in that the shaft and the stator are coupled by a coupling system according to any of the preceding claims.

12. A method of assembling a controlled axial clearance coupling system according to any of the claims 1 to 10, comprising the steps of:
(a1) providing a first tool (30) having two abutments (31, 32) axially spaced of a first distance (X) and a second tool (40) having two abutments (41, 42) axially spaced of a second distance (X-ΔX), the difference (ΔX) between the first distance and the second distance corresponding to the axial clearance to impart between the shaft (10) and the support (20);
(a2) provide an axial datum and resisting member (33);
(b) provide a non-set unit comprised of said shaft on which there are inserted all members for determining axial clearance between the shaft and the support;
(c) axially clamp said non-set unit between the resisting member (33) and the first tool (30), reaching the stopping arrangement in which the abutments (31, 32) and the resisting member (33) fix the set position of the retaining member (19) on the shaft (10), in the set position the distance between the upper ends (14b, 10b) of the bushing (14) and the shaft (10) being equal to said first distance (X);
(d) removing the resisting member (33) and replacing the first tool (30) with the second tool (40);
(e) using the second tool (40) to insert the unit in the support (20) forcing the bushing (14) in the recess (23) until the lower end (10a) of the shaft abuts the point-like rest (22).

13. A method according to claim 12, characterised in that said step (e) is preceded by the step of:
(a3) driving a ball (22) in the bottom of the recess (23) using a force (F) much greater than the operation axial loads (F2), whereby a permanent set (21b) is provided in the support (20).

14. A method according to claims 12 and 13, characterised in that step (e) is followed by the step of:
(f) applying an axial thrust (F1) to the shaft greater than the driving force (F) so as to provide a further deformation of the support (20) to increase the clearance between the shaft and the support.

15. A method for assembling a controlled axial clearance coupling system according to any of claims 1 to 10, further comprising the steps of:
(i) axially clamping a unit constituted of said shaft on which there are inserted the members for determining the axial clearance between the shaft and the support;
(ii) measuring the distance (X) between the upper end (10b) of the shaft (10) and the upper end (14b) of the bushing (14);
(iii) inserting said unit in the support forcing the bushing (14) in the recess (23);
(iv) causing the lower end (10a) of the shaft to abut the point-like rest (22);
(v) continuously measuring the distance between the ends (14b) and (10b); and
(vi) stopping the insertion of the bushing when said distance reaches a desired value (X±ΔX).
